# FASCICULE DE BREVET EUROPEEN

(11) **EP 3 670 221 B1**
(45) Date de publication et mention de la délivrance du brevet: **01.05.2024**
(21) Numéro de dépôt: 19218971.0
(22) Date de dépôt: 20.12.2019
(51) Int. Cl.: B60J 5/10

(54) **SOUS-ENSEMBLE DE VÉHICULE AUTOMOBILE COMPRENENT UNE DOUBLURE DE HAYON ET UN ÉLÉMENT D'INFERFAÇAGE D'UNE ZONE SERRURE DU HAYON**
BAUGRUPPE EINES KRAFTFAHRZEUGS UMFASSEND EINE INNENSCHALE EINER HECKKLAPPE UND EIN SCHNITTSTELLENELEMENT EINES SCHLOSSBEREICHS DER HECKKLAPPE
SUB-ASSEMBLY OF A MOTOR VEHICLE COMPRISING A TAILGATE LINING AND AN INTERFACING ELEMENT FOR A LOCKING ZONE OF THE TAILGATE

(30) Priorité: 20.12.2018 FR 1873669
(43) Date de publication de la demande: 24.06.2020
(73) Titulaire: Compagnie Plastic Omnium, 69007 Lyon (FR)
(72) Inventeur: COUDRON, Philippe, 01150 SAINTE-JULIE (FR)
(74) Mandataire: LLR

(56) Documents cités:
- WO-A1-2015/033076
- WO-A1-2018/065822
- DE-A1-102006 050 144
- JP-A- 2010 159 037

## Description

L'invention concerne un ouvrant arrière de véhicule automobile, c'est à dire un hayon en matière plastique, adapté aux exigences de sécurité lors d'un accident affectant l'ouvrant. Plus particulièrement, l'invention concerne un élément d'interfaçage d'une zone portant une serrure d'un ouvrant de véhicule automobile.

La très grande majorité des hayons de l'état de la technique est réalisée en acier. Mais l'on connaît également des hayons réalisés en matière plastique, thermoplastique et/ou thermodurcissable, de façon à alléger le hayon, mais en offrant des performances mécaniques différentes.

Un hayon plastique se compose de deux pièces principales : un caisson intérieur structurel, appelé également doublure, et une peau extérieure d'aspect.

La doublure peut être en matière thermoplastique soit en matériau thermodurcissable, qui présente une meilleure tenue à la déformation mais qui présente l'inconvénient d'être plus dense, ayant donc une masse plus importante. Ainsi, un matériau thermoplastique est souvent utilisé pour alléger le hayon par rapport à de la matière thermodurcissable. En ce sens, on connait un hayon décrit conformément à la demande WO2015033076 A1.

Pour satisfaire aux exigences générales des cahiers des charges répondant à des normes strictes, il est en particulier nécessaire de renforcer des zones d'attache de l'ouvrant sur le véhicule telles qu'une charnière, une serrure ou encore un vérin, et dont la fixation sur la doublure influe notamment sur la déformation du hayon à l'ensoleillement, à l'ouverture-fermeture, ou en cas d'effraction. Il est ainsi habituel d'ajouter à la doublure une plaque locale en acier pour assurer notamment par exemple un renfort de la zone serrure et fixer la serrure dessus.

Par ailleurs, il est également nécessaire en cas de choc dit à grande vitesse (>20km/h) subi par le véhicule, de limiter les risques d'éjection vers l'intérieur ou l'extérieur du véhicule de morceaux de la doublure, pouvant alors constituer un projectile.

Pour cela, la doublure doit être robuste afin d'éviter ou de limiter le nombre de morceaux formés en cas de choc. Par ailleurs, la doublure doit être suffisamment rigide pour assurer la bonne tenue géométrique de l'ouvrant lors d'une utilisation classique.

C'est pourquoi, lorsqu'on utilise un matériau thermoplastique pour la réalisation d'un ouvrant, le dimensionnement conduit à utiliser des matériaux rigides, au moins pour la doublure. Cependant, ces matériaux rigides s'avèrent peu extensibles en cas de choc à haute vitesse. En effet, ces matériaux rigides ont tendance, en cas de choc à haute vitesse, à se rompre en plusieurs morceaux.

C'est pourquoi, pour conserver la liaison entre le hayon et les morceaux cassés, il est connu d'utiliser une tresse de fibres de verre ou de câbles d'acier, rapportée sur la doublure de l'ouvrant. Cette tresse de liaison est généralement fixée de façon connue en plusieurs points de la doublure et laissée libre entre ces points afin de réaliser un cerclage périphérique de l'ouvrant, passant au moins par plusieurs des points de fixation de l'ouvrant à la caisse du véhicule. De ce fait, la casse des morceaux n'est pas empêchée, mais les morceaux une fois cassés restent reliés entre eux en constituant un ensemble de morceaux disloqués. Selon les conditions de choc, le nombre et la taille des morceaux cassés varient, ceux qui ne sont pas directement reliés à la tresse par un point de fixation deviennent totalement libres et ceux fixés à la tresse sont donc "quasi libres" du fait de la souplesse des tronçons de tresse les reliant. En ce sens, on connait de la demande WO2018065822 A1 des hayons de structures composites, pour lesquels un coussinet de doublure est prévu entre le panneau intérieur et le panneau extérieur du hayon, liant ces deux panneaux même en cas de chocs arrières.

Dans la zone et pour le cas particulier de la serrure, la plaque locale de renfort n'empêche pas la désolidarisation de la serrure, le point faible et de rupture se trouvant alors reporté à l'interface de fixation entre la plaque de renfort et la doublure formant ensemble un élément métallique bien plus robuste que la doublure. Cet ensemble lourd, une fois cassé n'est plus retenu que par la tresse à laquelle il est fixé.

Le document JP 2010 159037 A divulgue également un sous-ensemble de véhicule automobile, comprenant une doublure de hayon en matériau plastique et une plaque de renfort d'une zone serrure du hayon fixée sur une face extérieure de la doublure.

L'invention a pour but de remédier à ces inconvénients en fournissant un sous-ensemble de véhicule automobile comprenant une doublure en matériau plastique d'un hayon et un élément d'interfaçage d'une zone serrure du hayon de véhicule automobile selon la revendication 1.

Ainsi, l'élément d'interfaçage constitue une zone intermédiaire entre la serrure et la doublure permettant que la doublure soit encore maintenue à la serrure, y compris si la doublure est très déformée voire rompue localement dans cette zone à la suite d'un choc. En effet, le support dans lequel est surmoulée la plaque de renfort, permet d'assurer une cohésion des morceaux de la doublure susceptibles d'être formés à la suite d'un choc, empêchant ainsi leur projection à l'intérieur ou à l'extérieur de l'habitacle du véhicule, et que la doublure ne soit plus maintenue à la serrure, évitant ainsi que le hayon s'ouvre. En plus, l'élément d'interfaçage constitue un intermédiaire plus déformable que la doublure. Cela permet que la doublure soit encore maintenue à la serrure, y compris si la doublure est rompue localement dans cette zone à la suite d'un choc, l'élément d'interfaçage étant moins susceptible de se casser à la suite d'un choc grâce à ses propriétés mécaniques.

L'élément d'interfaçage selon le sous-ensemble de l'invention peut également comporter les caractéristiques suivantes, prises seules ou en combinaison :

- La plaque de renfort est en matériau métallique ou en matériau composite.

Cela permet de pouvoir fixer de façon efficace une serrure sur une plaque en matériau rigide compris dans l'élément d'interfaçage. Ainsi, la doublure est encore maintenue à la serrure, y compris si la doublure est rompue localement dans cette zone à la suite d'un choc.

- Le support est en matériau thermoplastique plus déformable que celui de la doublure.

Cela permet d'obtenir un élément d'interfaçage facile à mouler. De plus, contrairement aux matériaux rigides qui présentent un faible allongement à la rupture, les matériaux thermoplastiques présentent un meilleur allongement à la rupture.

- Le support est en matériau ayant les propriétés suivantes :
- un module d'Young compris entre 500MPa et 3000MPa, de préférence entre 800MPa et 2000MPa ;
- un coefficient d'allongement à la rupture supérieur à 20%, de préférence entre 20 et 80%, et encore de préférence supérieur à 80%.

Ainsi, l'élément d'interfaçage constitue un intermédiaire plus déformable que la doublure, la doublure étant typiquement réalisée en polypropylène renforcé à 30% en fibres de verre (PPGF30). Cela permet que la doublure soit encore maintenue à la serrure, notamment par l'intermédiaire de l'élément d'interfaçage, y compris si la doublure est rompue localement dans cette zone à la suite d'un choc. En effet, ces propriétés d'allongement et d'élasticité du support sous des efforts faibles permettent de maintenir la doublure déformée ou cassée sous l'effet du choc reliée à la serrure.

- Le support est en un matériau choisi parmi du polypropylène non renforcé (PP), du polypropylène renforcé, du polyéthylène non renforcé (PE) et du polyéthylène renforcé.

Cela permet de bénéficier des qualités mécaniques de ces matériaux en profitant d'un fort allongement à la rupture et d'une densité faible.

- Le support est de dimensions dans la direction d'axe Y et dans la direction d'axe Z supérieures aux dimensions dans la direction d'axe Y et dans la direction d'axe Z de la plaque de renfort de serrure.

Ainsi, cela permet de minimiser la masse additionnelle du support lorsque les dimensions dans la direction d'axe Y et dans la direction d'axe Z du support sont faiblement supérieures aux dimensions dans la direction d'axe Y et dans la direction d'axe Z de la plaque de renfort de serrure. Par ailleurs, plus les dimensions dans la direction d'axe Y et dans la direction d'axe Z du support sont supérieures aux dimensions dans la direction d'axe Y et dans la direction d'axe Z de la plaque de renfort de serrure, plus cela permet de donner à l'élément d'interfaçage une zone intermédiaire déformable plus grande, et permet donc d'absorber sans casse des élongations plus importantes en cas de choc.

- Le support présente, autour de la plaque de renfort de serrure, des bossages formant un creux dont la concavité est orientée selon la direction d'axe X par rapport à la doublure.

Ainsi, cela permet de procurer une plus grande surface développée et de conférer au support un effet de poutre améliorant la tenue au choc du hayon en partie basse comprenant en général, la zone serrure, ainsi qu'une zone intermédiaire déformable de plus grande surface donc apte à supporter de plus grandes déformations avant rupture.

- L'élément d'interfaçage comprend en outre des nervures de sorte à renforcer la résistance du support en cas de choc.

Ainsi, cela permet d'éviter que le support soit rompu en cas de choc, en renforçant la résistance du support de l'élément d'interfaçage, et notamment en renforçant les bossages du support.

L'invention concerne un sous-ensemble de véhicule automobile, comprenant une doublure de hayon et un élément d'interfaçage d'une zone serrure du hayon fixé sur une face extérieure de la doublure, l'élément d'interfaçage étant selon l'invention.

Ainsi, cela permet de renforcer la zone serrure du hayontout en maintenant reliés entre eux les éléments cassés lors d'un choc. En effet, l'élément d'interfaçage permet notamment d'empêcher que la serrure soit expulsée de la zone serrure vers l'intérieur ou l'extérieur du véhicule en cas de choc, tout en conservant un bilan masse satisfaisant et un bilan économique pertinent.

Le sous-ensemble selon l'invention peut également comporter les caractéristiques suivantes :
- l'élément d'interfaçage du hayon est fixé sur la face extérieure de la doublure au moyen d'au moins une des techniques choisie parmi le collage, le soudage, le bouterollage, le surmoulage, le vissage, le rivetage, le clippage et l'adhésivage.

Ainsi, cela permet que l'élément d'interfaçage soit fixé sur la doublure du hayon avec des moyens simples et faciles à mettre en oeuvre dans une chaine de production afin notamment d'augmenter la cadence de production.
- L'élément d'interfaçage du hayon est fixé sur la face extérieure de la doublure par vissage, par exemple à l'aide de vis auto-taraudeuse.

Cela permet de fixer l'élément d'interfaçage sur la doublure du hayon de façon simple, rapide et économique.
- Le sous-ensemble selon l'invention comprend en outre un organe de liaison destiné à retenir notamment des morceaux de l'élément d'interfaçage ou de la doublure susceptibles d'être formés en cas de choc.

Cela permet d'éviter la projection de morceaux de matière en cas de choc et notamment de conserver la liaison entre les points de fixation, par exemple les points de fixation du hayon à la caisse, situés en zone haute et basse du hayon
- L'organe de liaison est en matériau thermoplastique ou en fibre de verre.

Cela permet d'obtenir un organe de liaison résistant et de forme adaptée pour se loger entre la doublure et la peau d'aspect du hayon.
- L'organe de liaison est une tresse.

Cela permet de retenir les morceaux cassés par un moyen fin léger et très résistant en traction.

### Brève description des figures

L'invention sera mieux comprise à la lecture de la description qui va suivre donnée uniquement à titre d'exemple et faite en se référant aux dessins dans lesquels :
[Fig. 1] La figure 1 représente une vue en perspective d'un sous-ensemble de véhicule automobile selon l'invention.
[Fig. 2] La figure 2 est une vue en perspective d'une coupe d'un élément d'interfaçage d'un sous-ensemble selon l'invention.
[Fig. 3] La figure 3 est une vue en perspective d'un élément d'interfaçage d'un sous-ensemble selon l'invention représentant la surface intérieure du support.

Dans ce qui suit, les termes tels que « axe longitudinal X » ou « axe X », « axe transversal Y » ou « axe Y », « axe vertical Z » ou « axe Z », « avant », « arrière », « au-dessus », « supérieur », « en-dessous », « inférieur », etc. s'entendent par référence à l'orientation usuelle des véhicules automobiles selon les repères représentés sur les figures.

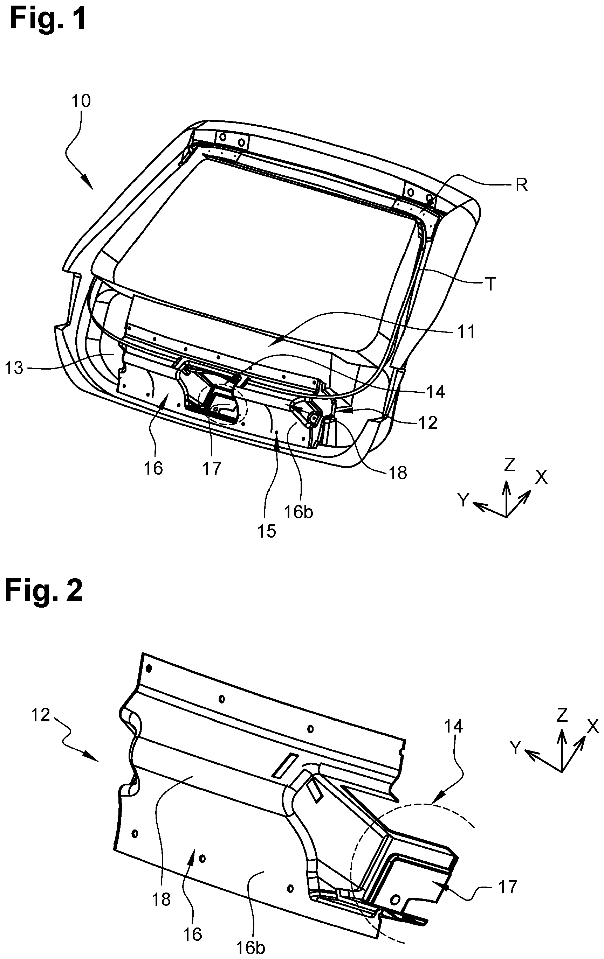

On a représenté sur la figure 1 un sous-ensemble 10 selon l'invention destiné à être rapporté sur un véhicule automobile. Dans l'exemple décrit, le sous-ensemble 10 est un ouvrant de véhicule, et plus particulièrement un hayon, et comprend une doublure 11 de hayon et un élément d'interfaçage 12 de serrure selon l'invention.

La doublure 11 comprend une surface intérieure, faisant face à un habitacle du véhicule, et une surface extérieure 13, opposée à l'habitacle.

Dans l'exemple décrit, la doublure 11 est en matériau plastique, et plus particulièrement en matériau thermoplastique ce qui permet de limiter la masse du hayon. Il est à noter que la doublure 11 peut également être réalisée en matériau plastique thermodurcissable.

L'élément d'interfaçage 12 est rapporté et fixé sur la surface extérieure 13 de la doublure 11 au niveau d'une zone serrure 14. L'élément d'interfaçage 12 peut être fixé par collage, soudage, bouterollage, surmoulage, vissage, rivetage, clippage ou encore adhésivage. De préférence, et comme représenté sur la figure 1, l'élément d'interfaçage 12 est fixé par vissage à l'aide de vis auto-taraudeuses 15 sur la surface extérieure 13 de la doublure 11.

Une peau extérieure d'aspect (non représentée) est destinée à être rapportée sur la surface extérieure 13 de la doublure 11, l'élément d'interfaçage 12 étant fixé sur la surface extérieure 13 de la doublure 11, et donc positionné entre la peau extérieure d'aspect et la doublure 11.

De préférence, et comme représenté sur la figure 1, le hayon comprend en outre un organe de liaison T qui est destiné à lier et conserver une liaison entre un ou plusieurs éléments composant le hayon, comme par exemple la doublure 11, l'élément d'interfaçage 12, un renfort R de fixation d'un vérin d'assistance à l'ouverture ou d'une charnière et une serrure. L'organe de liaison T peut également lier un ou plusieurs éléments composant le hayon à la caisse du véhicule situé par exemple dans une zone supérieure et inférieure du hayon, évitant ainsi la projection de morceaux de matière d'éléments composant le hayon en cas de choc.

Dans l'exemple décrit, l'organe de liaison T est une tresse en matériau thermoplastique. L'organe de liaison T peut également être en fibre de verre. On notera que l'organe de liaison T peut également être un câble, par exemple en acier.

On a représenté sur la figure 2 une vue en perspective d'une coupe de l'élément d'interfaçage 12. L'élément d'interfaçage 12 de la zone serrure 14 du hayon comprend un support 16 et une plaque de renfort 17 de la zone serrure 14 sur laquelle une serrure (non représentée) est destinée à être fixée.

La plaque de renfort 17 de la zone serrure 14 est intégrée par surmoulage au support 16. Ainsi, le support 16 qui surmoule la plaque de renfort 17, assure, grâce notamment à la capacité du matériau du support 16 à se déformer, une cohésion des morceaux de la doublure 11 susceptibles d'être formés à la suite d'un choc, et empêche leur projection à l'intérieur ou à l'extérieur de l'habitacle du véhicule. Par ailleurs, le support 16 assure que la doublure 11 soit maintenue à la serrure, même en cas de rupture partielle de la doublure 11 lors d'un choc.

La plaque de renfort 17 peut être réalisée par exemple en matériau métallique ou en matériau composite, par exemple en matériau composite renforcé par des fibres de verre ou de carbone. De préférence, la plaque de renfort 17 est réalisée en acier.

Le support 16 est réalisé en matériau plastique, de préférence en matériau thermoplastique qui est un matériau facile à mouler. Le support 16 présente une surface intérieure 16a faisant face à la surface extérieure 13 de la doublure 11, et une surface extérieure 16b, opposée à la surface intérieure 16a du support 16. Dans l'exemple décrit, le support 16 est réalisé en matériau thermoplastique ayant un module d'Young inférieur à celui du matériau plastique de la doublure 11 du hayon et un coefficient d'allongement à la rupture supérieur à celui du matériau plastique de la doublure 11 du hayon. Ainsi, l'élément d'interfaçage 12 constitue un intermédiaire plus déformable que la doublure 11 permettant que la doublure 11, soit encore maintenue à la serrure, par l'intermédiaire de l'élément d'interfaçage 12, y compris si la doublure 11 est rompue localement dans la zone serrure à la suite d'un choc. Le support 16 assure la cohésion des morceaux de la doublure 11 susceptibles d'être formé en cas de choc et le maintien de la doublure à la serrure.

De préférence, le support 16 est réalisé en matériau thermoplastique ayant un module d'Young compris entre 500MPa et 3000MPa et un coefficient d'allongement à la rupture supérieur à 20%. De façon encore plus préférentielle, le support 16 est réalisé en matériau thermoplastique ayant un module d'Young compris entre 800MPa et 2000MPa et un coefficient d'allongement à la rupture supérieur entre 20% et 80% et encore plus de préférence supérieur à 80%. Ainsi, ces propriétés d'allongement et d'élasticité du support 16 sont particulièrement adaptées pour permettre de maintenir la doublure 11 à la serrure, par l'intermédiaire de l'élément d'interfaçage 12, y compris si la doublure 11 est déformée ou cassée à la suite d'un choc.

Des matériaux tels que le polypropylène (PP), de préférence non renforcé, ou le polyéthylène (PE), de préférence non renforcé sont particulièrement adaptés pour réaliser le support 16 afin de bénéficier de leur forte capacité d'allongement à la rupture et de leur faible densité.

Dans l'exemple décrit, le support 16 présente des dimensions dans la direction d'axe Y et dans la direction d'axe Z supérieures aux dimensions dans la direction d'axe Y et dans la direction d'axe Z de la plaque de renfort 17 de la zone serrure 14. Ainsi, le support 16 et donc l'élément d'interfaçage 12 présente une zone intermédiaire d'interfaçage plus grande ce qui lui permet d'absorber, sans se casser, des élongations plus importantes en cas de choc. De préférence, le support 16 a une forme générale qui présente, autour de la plaque de renfort 17, des reliefs, et plus particulièrement des bossages 18 formant un creux 19 avec la doublure 11. Le creux 19 forme un espace libre délimité par la surface extérieure 13 de la doublure 11 et la surface interne 16a du support 16. Les bossages 18 confèrent au support 16 un effet de poutre, c'est-à-dire de renfort structurel, et permettent ainsi d'améliorer la tenue du hayon en partie basse comprenant la zone serrure 14, en cas de choc. Selon une variante (non représentée), la forme générale du support 16 suit sensiblement la forme générale de la doublure 11 du hayon dans la zone serrure et a des dimensions dans la direction d'axe Y et dans la direction d'axe Z faiblement supérieures aux dimensions dans la direction d'axe Y et dans la direction d'axe Z de la plaque de renfort 17 de la zone serrure 14, de sorte à minimiser la masse additionnelle du support 16 sur le hayon.

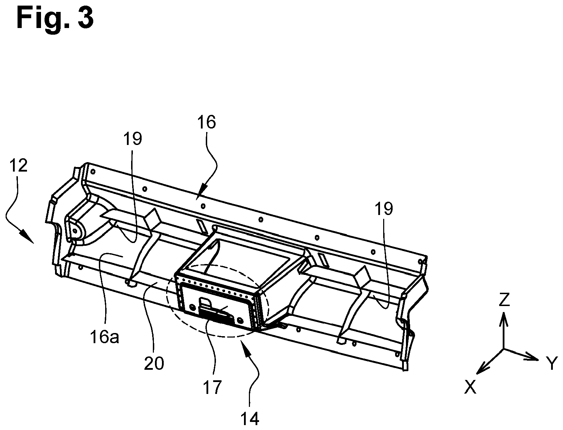

Par ailleurs, et comme représenté sur la figure 3, l'élément d'interfaçage 12 comprend des nervures 20 qui sont destinées à renforcer la résistance du support 16 de l'élément d'interfaçage 12, et notamment renforcer les bossages 18 du support 16 en cas de choc. Ainsi les nervures, participent à éviter que le support 16 soit rompu en cas de choc.

## Revendications

1. Sous-ensemble (10) de véhicule automobile, comprenant une doublure (11) de hayon en matériau plastique et un élément d'interfaçage (12) d'une zone serrure (14) du hayon fixé sur une face extérieure (13) de la doublure (11), **caractérisé en ce que** l'élément d'interfaçage comprend :
- un support (16) en matériau plastique destiné à être rapporté sur la doublure (11), et
- une plaque de renfort (17) de la zone serrure (14) sur laquelle est destiné à être fixé une serrure, la plaque (17) étant intégrée au support (16) par surmoulage,
et **en ce que** le support (16) est en matériau ayant un module d'Young inférieur à celui du matériau plastique de la doublure (11) du hayon, et un coefficient d'allongement à la rupture supérieur à celui du matériau plastique de la doublure (11) du hayon.

2. Sous-ensemble (10) selon la revendication 1, dans lequel la plaque de renfort (17) est en matériau métallique ou en matériau composite.

3. Sous-ensemble (10) selon la revendication 1 ou 2, dans lequel le support (16) est en matériau thermoplastique plus déformable que le matériau de la doublure.

4. Sous-ensemble (10) selon l'une quelconque des revendications précédentes, dans lequel le support (16) est en matériau ayant les propriétés suivantes :
- un module d'Young compris entre 500MPa et 3000MPa, de préférence entre 800MPa et 2000MPa ;
- un coefficient d'allongement à la rupture supérieur à 20%, de préférence entre 20 et 80%, et encore de préférence supérieur à 80%.

5. Sous-ensemble (10) selon l'une quelconque des revendications précédentes, dans lequel le support (16) est en un matériau choisi parmi du polypropylène non renforcé (PP), du polypropylène renforcé, du polyéthylène non renforcé (PE) et du polyéthylène renforcé.

6. Sous-ensemble (10) selon l'une quelconque des revendications précédentes, dans lequel le support (16) est de dimensions dans la direction d'axe Y et dans la direction d'axe Z supérieures aux dimensions dans la direction d'axe Y et dans la direction d'axe Z de la plaque de renfort (17) de serrure.

7. Sous-ensemble (10) selon l'une quelconque des revendications précédentes, dans lequel le support (16) présente, autour de la plaque de renfort (17) de serrure, des bossages (18) formant un creux (19) dont la concavité est orientée selon la direction d'axe X par rapport à la doublure (11).

8. Sous-ensemble (10) selon l'une quelconque des revendications précédentes, comprenant en outre des nervures (20) de sorte à renforcer la résistance du support (16) en cas de choc.

9. Sous-ensemble (10) de véhicule automobile selon l'une quelconque des revendications précédentes, dans lequel l'élément d'interfaçage (12) du hayon est fixé
sur la face extérieure (13) de la doublure (11) au moyen d'au moins une des techniques choisie parmi le collage, le soudage, le bouterollage, le surmoulage, le vissage, le rivetage, le clippage et l'adhésivage.

10. Sous-ensemble (10) de véhicule automobile selon l'une quelconque des revendications précédentes, dans lequel l'élément d'interfaçage (12) du hayon est fixé
sur la face extérieure (13) de la doublure (11) par vissage, par exemple à l'aide de vis auto-taraudeuse.

11. Sous-ensemble (10) de véhicule automobile selon l'une quelconque des revendications précédentes, comprenant en outre un organe de liaison (T) destiné à retenir notamment des morceaux de l'élément d'interfaçage (12) ou de la doublure (11) susceptibles d'être formés en cas de choc.

12. Sous-ensemble (10) de véhicule automobile selon la revendication 11, dans lequel l'organe de liaison (T) est en matériau thermoplastique ou en fibre de verre.

13. Sous-ensemble (10) de véhicule automobile selon la revendication 12, dans lequel l'organe de liaison (T) est une tresse.

## Patentansprüche

1. Baugruppe (10) für Kraftfahrzeug, umfassend eine Innenschale (11) einer Heckklappe aus Kunststoff und ein Schnittstellenelement (12) einer Schlosszone (14) der Heckklappe, das an einer Außenfläche (13) der Innenschale (11) befestigt ist, **dadurch gekennzeichnet, dass** das Schnittstellenelement umfasst:
- einen Träger (16) aus Kunststoff, der dazu bestimmt ist, auf der Innenschale (11) angebracht zu werden, und
- eine Platte (17) zur Verstärkung der Schlosszone (14), auf der ein Schloss befestigt werden soll, wobei die Platte (17) in den Träger (16) durch Überspritzen integriert ist,
und dadurch, dass der Träger (16) aus einem Material ist, das einen Young-Modul, der kleiner ist als der des Kunststoffs der Innenschale (11) der Heckklappe, und einen Bruchdehnungskoeffizient, der größer ist als der des Kunststoffs der Innenschale (11) der Heckklappe, aufweist.

2. Baugruppe (10) nach Anspruch 1, wobei die Verstärkungsplatte (17) aus metallischem Material oder aus Verbundmaterial ist.

3. Baugruppe (10) nach Anspruch 1 oder 2, wobei der Träger (16) aus thermoplastischem Material ist, das verformbarer ist als das Material der Innenschale.

4. Baugruppe (10) nach einem der vorhergehenden Ansprüche, wobei der Träger (16) aus Material ist, das die folgenden Eigenschaften aufweist:
- ein Young-Modul zwischen 500 MPa und 3000 MPa, bevorzugt zwischen 800 MPa und 2000 MPa;
- einen Bruchdehnungskoeffizienten größer als 20 %, bevorzugt zwischen 20 und 80 % und weiter bevozugt größer als 80 %.

5. Baugruppe (10) nach einem der vorhergehenden Ansprüche, wobei der Träger (16) aus einem Material ist, das ausgewählt ist aus unverstärktem Polypropylen (PP), verstärktem Polypropylen, unverstärktem Polyethylen (PE) und verstärktem Polyethylen.

6. Baugruppe (10) nach einem der vorhergehenden Ansprüche, wobei der Träger (16) in der Y-Achsenrichtung und in der Z-Achsenrichtung Abmessungen aufweist, die größer sind als die Abmessungen in der Y-Achsenrichtung und in der Z-Achsenrichtung der Platte (17) zur Verstärkung des Schlosses.

7. Baugruppe (10) nach einem der vorhergehenden Ansprüche, wobei der Träger (16), um die Platte (17) zur Verstärkung des Schlosses herum, Höcker (18) aufweist, die eine Vertiefung (19) bilden, deren Konkavität gemäß der X-Achsenrichtung relativ zu der Innenschale (11) orientiert ist.

8. Baugruppe (10) nach einem der vorhergehenden Ansprüche, ferner umfassend Rippen (20), um die Widerstandsfähigkeit des Trägers (16) bei einem Zusammenstoß zu verstärken.

9. Baugruppe (10) für Kraftfahrzeug nach einem der vorhergehenden Ansprüche, wobei das Schnittstellenelement (12) der Heckklappe auf der Außenfläche (13) der Innenschale (11) mittels einer der Techniken, ausgewählt aus Kleben, Schweißen, Nietstempeln, Überspritzen, Schrauben, Nieten, Einrasten und Haftvermitteln, befestigt ist.

10. Baugruppe (10) für Kraftfahrzeug nach einem der vorhergehenden Ansprüche, wobei das Schnittstellenelement (12) der Heckklappe auf der Außenfläche (13) der Innenschale (11) durch Schrauben, zum Beispiel mit Hilfe selbstschneidender Schraube, befestigt ist.

11. Baugruppe (10) für Kraftfahrzeug nach einem der vorhergehenden Ansprüche, ferner umfassend ein Verbindungsorgan (T), das dazu bestimmt ist, insbesondere Bruchstücke des Schnittstellenelements (12) oder der Innenschale (11), die sich bei einem Aufprall bilden können, zurückzuhalten.

12. Baugruppe (10) für Kraftfahrzeug nach Anspruch 11, wobei das Verbindungsorgan (T) aus thermoplastischem Material oder aus Glasfaser ist.

13. Baugruppe (10) für Kraftfahrzeug nach Anspruch 12, wobei das Verbindungsorgan (T) ein Geflecht ist.

## Claims

1. Motor vehicle sub-assembly (10), comprising a lining (11) made of a plastic material of a tailgate and an interfacing element (12) of a lock zone (14) of the tailgate fastened to an outer face (13) of the lining (11), **characterised in that** the interfacing element (12) comprises:
- a support (16) made of plastic material intended to be attached to the lining (11), and
- a reinforcing plate (17) for the lock zone (14) onto which a lock is intended to be fastened, the plate (17) being integrated into the support (16) by overmoulding,
and wherein the support (16) is made of a material having a Young's modulus lower than that of the plastic material of the lining (11) of the tailgate, and a coefficient of elongation at rupture greater than that of the plastic material of the lining (11) of the tailgate.

2. Motor vehicle sub-assembly (10) according to claim 1, wherein the reinforcing plate (17) is made of metallic material or of composite material.

3. Motor vehicle sub-assembly (10) according to claim 1 or 2, wherein the support (16) is made of thermoplastic material which is more deformable than the material of the lining.

4. Motor vehicle sub-assembly (10) according to any one of the preceding claims, wherein the material of the support (16) has the following properties:
- a Young's modulus of between 500MPa and 3000MPa, preferably between 800MPa and 2000MPa;
- a coefficient of elongation at rupture greater than 20%, preferably between 20 and 80%, and even more preferably greater than 80%.

5. Motor vehicle sub-assembly (10) according to any one of the preceding claims, wherein the support (16) is made of a material chosen from among unreinforced polypropylene (PP), reinforced polypropylene, unreinforced polyethylene (PE) and reinforced polyethylene.

6. Motor vehicle sub-assembly (10) according to any one of the preceding claims, wherein the support (16) has dimensions in the Y-axis direction and in the Z-axis direction greater than the dimensions in the Y-axis direction and in the Z-axis direction of the lock reinforcing plate (17).

7. Motor vehicle sub-assembly (10) according to any one of the preceding claims, wherein the support (16) has, around the lock reinforcing plate (17), bosses (18) forming a hollow (19) whose concavity is oriented in the direction of the X-axis with respect to the lining (11).

8. Motor vehicle sub-assembly (10) according to any of the preceding claims, wherein the interfacing element (12) further comprises ribs (20) so as to reinforce the resistance of the support (16) in the event of an impact.

9. Motor vehicle sub-assembly (10) according to any one of the preceding claims, wherein the interfacing element (12) of the tailgate is fastened to the outer face (13) of the lining (11) by means of at least one of the techniques chosen from among bonding, welding, heading, overmoulding, screwing, riveting, clipping and adhesive bonding.

10. Motor vehicle sub-assembly (10) according to any one of the preceding claims, wherein the interfacing element (12) of the tailagte is attached to the outer face (13) of the lining (11) by screwing, for example using self-tapping screws.

11. Motor vehicle sub-assembly (10) according to any one of the preceding claims, further comprising a connecting member (T) intended in particular to retain pieces of the interfacing element (12) or of the lining (11) liable to be formed in the event of an impact.

12. Motor vehicle sub-assembly (10) according to claim 11, wherein the connecting member (T) is made of thermoplastic material or fibreglass.

13. Motor vehicle sub-assembly (10) according to claim 12, wherein the connecting member (T) is a braid.
